(19) Europäisches Patentamt / European Patent Office / Office européen des brevets

(11) **EP 4 227 648 A1**

(12) **EUROPEAN PATENT APPLICATION**
published in accordance with Art. 153(4) EPC

(43) Date of publication:
**16.08.2023 Bulletin 2023/33**

(21) Application number: **20956801.3**

(22) Date of filing: **11.11.2020**

(51) International Patent Classification (IPC):
**G01D 5/347** (2006.01)

(52) Cooperative Patent Classification (CPC):
**G01D 5/244; G01D 5/245; G01D 5/347**

(86) International application number:
**PCT/JP2020/042028**

(87) International publication number:
**WO 2022/074854 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.10.2020  JP 2020170551**

(71) Applicant: **Tamagawa Seiki Co., Ltd.**
**Iida-shi**
**Nagano 395-8515 (JP)**

(72) Inventor: **KUBOTA, Muneaki**
**Iida-shi, Nagano 395-8515 (JP)**

(74) Representative: **Patentanwälte Geyer, Fehners &
Partner mbB
Perhamerstrasse 31
80687 München (DE)**

(54) **ENCODER DEVICE**

(57)     This invention concerns an encoder apparatus that detects rotation of a rotating disc (120) provided with slits (130) using an encoder detection unit (140), and calculates a rotation angle of the rotating disc (120) using an encoder processing unit (150), wherein, in the encoder detection unit (140), a plurality of sets of light reception elements required to generate angle data are provided in a single light reception unit (142) in a predetermined arrangement, and the encoder processing unit (150) converts light reception signals acquired by the plurality of sets of light reception elements into angle data of one rotation, calculates an absolute value accuracy error in the angle data of one rotation from the angle data and arrangement information relating to the arrangement, calculates the rotation angle by correcting an absolute accuracy of the angle data of one rotation using the absolute value accuracy error, and resolves the absolute value accuracy error by outputting the calculated rotation angle to the outside.

FIG. 1

**Description**

Technical Field

This invention relates to an encoder apparatus.

Background Art

An optical encoder apparatus having a rotating disc provided with slits, an encoder detection unit having a light emitting/receiving unit, and an encoder processing unit that calculates the rotation angle of the rotating disc from the detection result of the encoder detection unit is available. It is known that in the case of this encoder apparatus, when the rotary center of the rotating disc and the pattern center of the slits are not accurately aligned, an error (referred to hereafter as an absolute value accuracy error) of one period per rotation occurs.

PTL 1 proposes a method for resolving the absolute value accuracy error described above by arranging encoder detection units respectively in two locations opposing each other on either side of the rotary center of the rotating disc so that two sets of angle data having a 180° phase difference are generated, and averaging the two sets of angle data.

Citation List

Patent Literature

[PTL 1] Japanese Patent Application Publication No. S60-146113

Summary of Invention

Technical Problem

In the method of PTL 1, in order to generate the two sets of angle data having a 180° phase difference, two encoder detection units must be arranged accurately in positions opposing each other on either side of the rotary center of the rotating disc.

When encoder detection units are provided in two locations in this manner, problems such as an increase in the size of the encoder apparatus, a cost increase caused by the increase in the number of components, and poor installation workability due to the need to adjust the two encoder detection units occur.

Hence, there is demand for an encoder apparatus with which, when the rotation angle of the rotating disc is calculated by optically detecting rotation of the slits in the rotating disc, an increase in the size of the apparatus and a cost increase do not occur, installation can be performed easily without the need for troublesome adjustments, and the absolute value accuracy error of one period per rotation included in the angle data can be accurately resolved.

An object of this invention is to resolve an absolute value accuracy error included in a detected angle when the rotation angle of a rotating disc is calculated by optically detecting the rotation of slits in the rotating disc, and to reduce the size of an encoder apparatus and facilitate installation thereof.

Solution to Problem

An encoder apparatus according to this invention is an encoder apparatus that detects rotation of a rotating disc provided with slits using an encoder detection unit, and calculates a rotation angle of the rotating disc using an encoder processing unit, wherein, in the encoder detection unit, a plurality of sets of light reception elements required to generate angle data are provided in a single light reception unit in a predetermined arrangement, and the encoder processing unit converts light reception signals acquired by the plurality of sets of light reception elements into angle data of one rotation, calculates an absolute value accuracy error in the angle data of one rotation from the angle data and arrangement information relating to the arrangement, calculates the rotation angle by correcting an absolute accuracy of the angle data of one rotation using the absolute value accuracy error, and outputs the calculated rotation angle to the outside.

Advantageous Effects of Invention

According to this invention, it is possible to provide an encoder apparatus that can resolve an absolute value accuracy error included in a detected angle when calculating the rotation angle of a rotating disc by optically detecting the rotation of slits in the rotating disc, and that can be reduced in size and easily installed.

Brief Description of Drawings

Fig. 1 is a configuration diagram showing a circuit configuration of an encoder apparatus according to a first embodiment of this invention.
Fig. 2 is a schematic view showing a configuration of main parts of the encoder apparatus according to the first embodiment of this invention.
Fig. 3 is a schematic view showing a configuration of a light reception unit according to the first embodiment of this invention in detail.
Fig. 4 is an illustrative view showing optical radii from a rotary center of a rotating disc to the light reception unit according to the first embodiment of this invention.
Fig. 5 is a schematic view showing a configuration of main parts of a conventional encoder apparatus.

Description of Embodiments

Embodiments of an encoder apparatus according to this invention will be described below using the figures. Note that in the figures, identical reference numerals have been attached to identical parts.

First embodiment

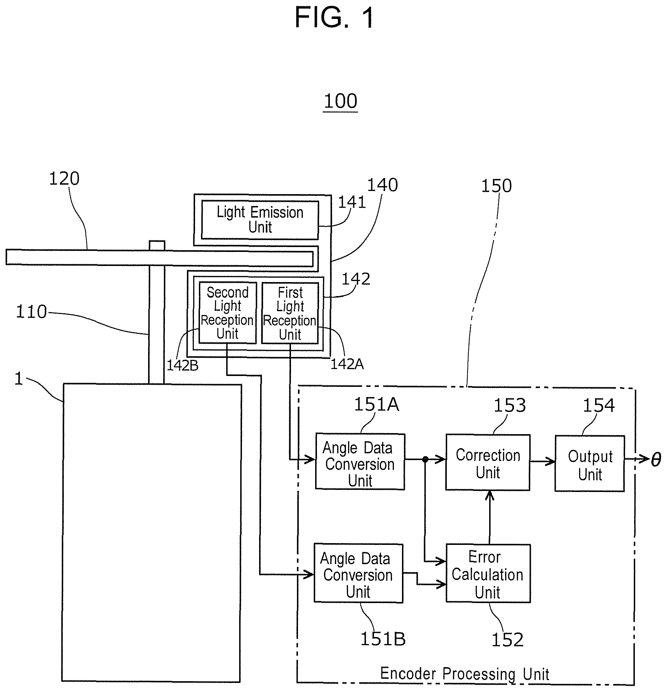

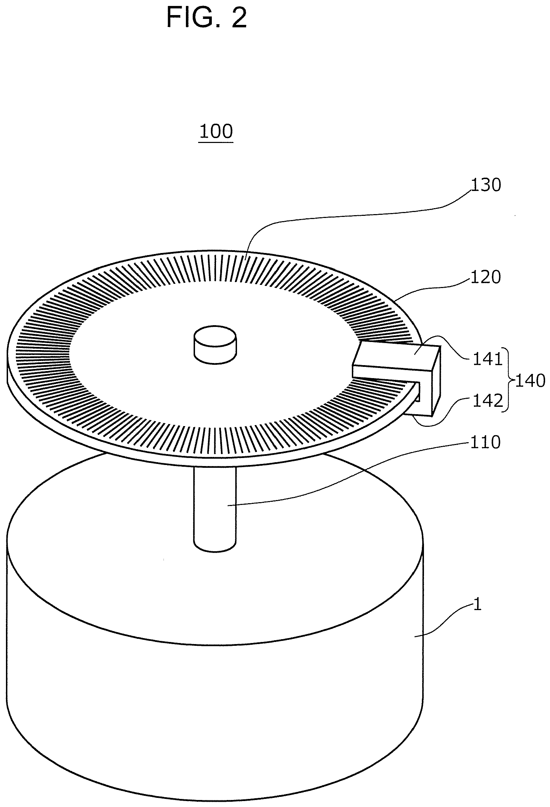

First, the basic configuration of an encoder apparatus 100 according to a first embodiment of this invention will be described with reference to Figs. 1 and 2. Fig. 1 is a configuration diagram showing a circuit configuration of the encoder apparatus 100 according to the first embodiment of this invention. Fig. 2 is a schematic view showing a configuration of main parts of the encoder apparatus 100 according to the first embodiment of this invention.

[Configuration of encoder apparatus 100]

In Fig. 1, the encoder apparatus 100 is used to calculate a rotation angle of a rotating body 1, and mainly includes a rotating shaft 110, a rotating disc 120, an encoder detection unit 140, and an encoder processing unit 150. In the encoder apparatus 100, when calculating the rotation angle of the rotating body 1, an absolute value accuracy error included in angle data is corrected.

As shown in Fig. 2, slits 130 are formed in the rotating disc 120 in a radial shape. The rotating disc 120 is connected to the rotating body 1 by the rotating shaft 110. Thus, the rotating disc 120 in which the slits 130 are formed rotates at the same rotation speed to the rotating body 1.

The encoder detection unit 140 includes a light emission unit 141 and a light reception unit 142 provided so as to sandwich the rotating disc 120. Accordingly, the encoder detection unit 140 is a transmissive sensor that irradiates the slits 130 in the rotating disc 120 using the light emission unit 141 and receives transmitted light that is transmitted through the slits 130 using the light reception unit 142, and in so doing optically detects the rotation of the rotating disc 120. Note that when a reflective pattern is formed on the rotating disc 120 instead of the slits 130, a reflective sensor can be used as the encoder detection unit 140.

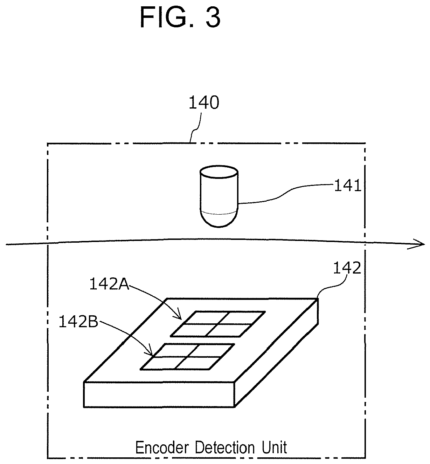

Fig. 3 shows a configuration of the light reception unit 142 of the encoder detection unit 140 in detail. Fig. 3 is a schematic view showing the configuration of the light reception unit 142 according to the first embodiment of this invention in detail. In the encoder detection unit 140, a first light reception unit 142A and a second light reception unit 142B of the single light reception unit 142 are arranged in identical positions in a circumferential direction of the rotating disc 120 and different positions in a radial direction of the rotating disc 120.

Note that the first light reception unit 142A and the second light reception unit 142B are each constituted by a light reception element set constituted by a set of four light reception elements. In other words, a plurality of sets of light reception elements required to generate angle data are provided in the single light reception unit 142 in a predetermined arrangement.

Here, a+, a-, b+, and b- are assigned to the four light reception elements constituting the light reception element set. By adding and subtracting signals from the a+, a-, b+, and b- light reception elements, two-phase light reception signals that are used for angle data calculation and have different phases to each other can be acquired.

The encoder processing unit 150 is provided with an angle data conversion unit 151A, an angle data conversion unit 151B, an error calculation unit 152, a correction unit 153, and an output unit 154. The angle data conversion unit 151A performs arithmetic processing on the two-phase light reception signals from the first light reception unit 142A in order to calculate first angle data P1. The angle data conversion unit 151B performs arithmetic processing on the two-phase light reception signals from the second light reception unit 142B in order to calculate second angle data P2. Note that the first angle data P1 and the second angle data P2 may also be calculated by switching a single angle data conversion unit at high speed. Further, a level correction circuit may be disposed at the inputs of the angle data conversion units 151A and 151B.

The error calculation unit 152 refers to the first angle data P1, the second angle data P2, and arrangement information, to be described below, in order to calculate an absolute value accuracy error $\Delta 1$ of one period per rotation, which is included in the first angle data P1. The correction unit 153 corrects the absolute accuracy of the angle data per rotation by subtracting the absolute value accuracy error $\Delta 1$ from the first angle data P1, and thereby calculates a rotation angle $\theta$ of the rotating disc 120. The output unit 154 outputs the rotation angle $\theta$ of the rotating disc 120 to an external device. In order to output the rotation angle $\theta$ to the external device, the output unit 154 may have a communication function.

[Processing of encoder apparatus 100]

Next, processing performed in the encoder apparatus 100 when calculating the rotation angle $\theta$ by optically detecting the rotation of the slits 130 in the rotating disc 120 will be described. Here, terminology, parameters, and data used when calculating the rotation angle $\theta$ are as follows.

In the encoder apparatus 100, when the rotary center of the rotating disc 120 and the pattern center of the slits 130 are not aligned, the rotation of the slits 130 is detected by the encoder detection unit 140 in a state that differs from a perfect circle over a period of one rotation. As a result, the angle data calculated by the encoder processing unit 150 includes an error of one period per rotation relative to the true rotation angle $\theta$. This error of one period per rotation will be referred to as an absolute value accuracy error.

Parameters used in the first embodiment are defined as follows.

The rotation angle of the rotating disc 120 when no error occurs is set as $\theta$ (rad),

the first angle data calculated by the angle data conversion unit 151A using the light reception signals received by the first light reception unit 142A from the slits 130 is set as P1 (rad) = $\theta$ + $\Delta 1$,
the second angle data calculated by the angle data conversion unit 151B using the light reception signals received by the second light reception unit 142B from the slits 130 is set as P2 (rad) = $\theta$ + $\Delta 2$,
the absolute value accuracy error included in the first angle data P1 is set as $\Delta 1$ (rad), and
the absolute value accuracy error included in the second angle data P2 is set as $\Delta 2$ (rad).

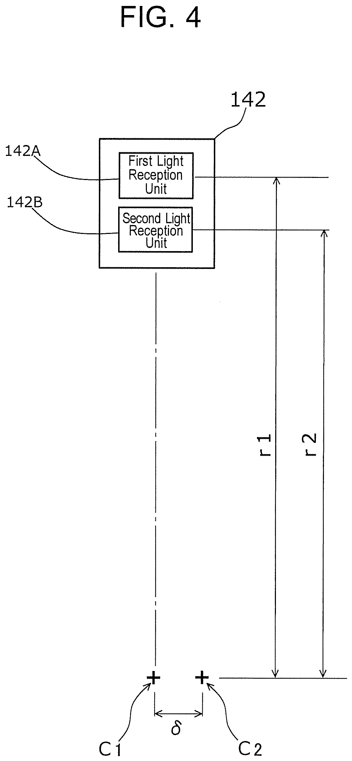

A state in which the rotary center of the rotating disc 120 and the pattern center of the slits 130 are not aligned will now be described using Fig. 4. Fig. 4 is an illustrative view showing optical radii from the rotary center of the rotating disc 120 to the light reception unit 142 as arrangement information according to the first embodiment of this invention.

In Fig. 4, C1 is the rotary center of the rotating disc 120, and C2 is the pattern center of the slits 130. Further, a distance from the rotary center C1 to the first light reception unit 142A is set as an optical radius r1, a distance from the rotary center C1 to the second light reception unit 142B is set as an optical radius r2, and a distance between the rotary center C1 of the rotating disc 120 and the pattern center C2 of the slits 130 is set as a deviation $\delta$.

Here, the optical radii r1 and r2 serve as arrangement information relating to the arrangement of the plurality of light reception element sets constituting the first light reception unit 142A and the second light reception unit 142B. Note that the arrangement information may additionally include information such as the distances between the plurality of light reception element sets and the angles thereof.

The error calculation unit 152 calculates the absolute value accuracy error $\Delta 1$ as follows.

Here, the absolute value accuracy error $\Delta 1$ can be expressed as

$$\Delta 1 = (\delta / r1) \times \sin\theta.$$

Further, the absolute value accuracy error $\Delta 2$ can be expressed as

$$\Delta 2 = (\delta / r2) \times \sin\theta.$$

By rearranging the above two formulae of the absolute value accuracy errors $\Delta 1$ and $\Delta 2$ so as to exclude $\sin\theta$,

$$\Delta 1 = (r2 / (r2 - r1)) \times (\Delta 1 - \Delta 2)$$

is acquired.

Then, when Δ2 is removed from the above formula of Δ1 using P1 = θ + Δ1, P2 = θ + Δ2, the result can be expressed as

$$\Delta 1 = (r2/(r2 - r1)) \times (P1 - P2).$$

In other words, the error calculation unit 152 can calculate the absolute value accuracy error Δ1 using the first angle data P1, the second angle data P2, and the optical radii r1 and r2.

Here, (r2/(r2 - r1)) in the formula for calculating Δ1 is a constant. Therefore, the error calculation unit 152 can calculate the absolute value accuracy error Δ1 at high speed from the difference between the first angle data P1 and the second angle data P2 and a constant.

The correction unit 153 uses the absolute value accuracy error Δ1 calculated by the error calculation unit 152 to calculate the rotation angle θ as

$$\theta = P1 - \Delta 1.$$

Here, the correction unit 153 simply subtracts Δ1 calculated by the error calculation unit 152 from the first angle data P1 calculated by the angle data conversion unit 151A, and therefore the rotation angle θ can be calculated at high speed.

More specifically, using the first angle data P1 calculated from the light reception signals of the first light reception unit 142A, the second angle data P2 calculated from the light reception signals of the second light reception unit 142B, the optical radius r1 of the first light reception unit 142A, and the optical radius r2 of the second light reception unit 142B, the encoder processing unit 150 can calculate the rotation angle θ as

$$\theta = P1 - \Delta 1 = P1 - (r2/(r2 - r1)) \times (P1 - P2).$$

Here, (r2/(r2 - r1)) is a constant, and therefore the rotation angle θ can be calculated at high speed and with high accuracy from the first angle data P1, the second angle data P2 and a constant.

[Configuration and operation of comparative example (encoder apparatus 100A)]

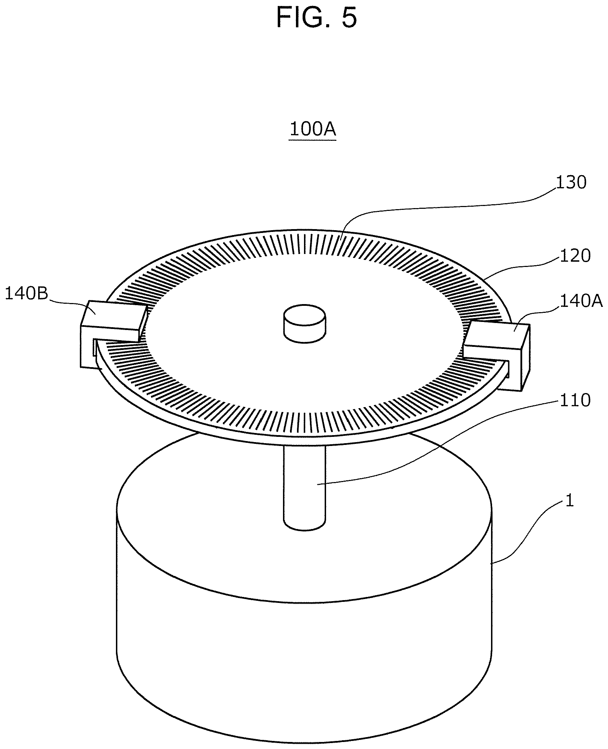

Here, a configuration of a conventional encoder apparatus 100A will be described as a comparative example of the encoder apparatus 100 according to the first embodiment. Fig. 5 is a schematic view showing a configuration of main parts of the conventional encoder apparatus 100A.

In Fig. 5, the rotating disc 120 provided with the slits 130 is connected to the detection subject rotating body 1 via the rotating shaft 110 so as to rotate at the same speed as the rotating body 1. Two encoder detection units 140A and 140B each include a light emission unit and a light reception unit, and are provided in positions opposing each other on either side of the rotary center of the rotating disc 120 in order to detect light transmission and light blockage by the slits 130 during rotation of the rotating disc 120.

When the rotary center of the rotating disc 120 and the pattern center of the slits 130 are not aligned, the absolute value accuracy errors included in first angle data calculated from the light reception signals of the encoder detection unit 140A and second angle data calculated from the light reception signals of the encoder detection unit 140B logically have a phase difference of 180°. Hence, by averaging the first angle data and the second angle data, the absolute value accuracy error of one period per rotation is canceled out and thereby disappears.

As described above, in the conventional encoder apparatus 100A, the encoder detection units 140A and 140B must be arranged accurately in positions opposing each other on either side of the rotary center of the rotating disc 120, and as a result, the size of the encoder apparatus 100A increases. Moreover, due to the need to provide the encoder detection units 140A and 140B, a cost increase occurs as a result of the increase in the number of components. Moreover, in order to cancel out the absolute value accuracy error by averaging, fine adjustments must be made to the positions of the two encoder detection units 140A and 140B to ensure that the phase difference between the absolute value accuracy error included in the first angle data and the absolute value accuracy error included in the second angle data is precisely 180°, and as a result, the installation workability is poor.

[Comparison of encoder apparatus 100 and encoder apparatus 100A]

As described above, with the encoder apparatus 100 of the first embodiment, in contrast to the conventional encoder apparatus 100A, the single encoder detection unit 140 can be used when calculating the rotation angle θ by optically detecting the rotation of the slits 130 in the rotating disc 120, and therefore an increase in the size of the apparatus and a cost increase do not occur, the apparatus can be installed easily without the need for troublesome adjustments, and the absolute value accuracy error included in the detected angle can be resolved.

[Effects of embodiment]

The encoder apparatus 100 according to the first embodiment optically detects the slits 130 provided in the rotating disc 120 using the encoder detection unit 140 and calculates the rotation angle θ of the rotating disc 120 using the encoder processing unit 150, while the first light reception unit 142A and the second light reception unit 142B of the encoder detection unit 140 are provided in different positions in the radial direction of the rotating disc 120. The encoder processing unit 150 then calculates the rotation angle θ as $\theta = P1 - \Delta1 = P1 - (r2/(r2 - r1)) \times (P1 - P2)$, where the first angle data calculated by the angle data conversion unit 151A using the light reception signals received by the first light reception unit 142A from the slits 130 is set as $P1 = \theta + \Delta1$, the second angle data calculated by the angle data conversion unit 151B using the light reception signals received by the second light reception unit 142B from the slits 130 is set as $P2 = \theta + \Delta2$, the absolute value accuracy error included in the first angle data P1 is set as $\Delta1$, the absolute value accuracy error included in the second angle data P2 is set as $\Delta2$, the distance from the rotary center C1 to the first light reception unit 142A is set as the optical radius r1, and the distance from the rotary center C1 to the second light reception unit 142B is set as the optical radius r2.

Here, since the encoder apparatus 100 detects the rotation angle θ not including the absolute value accuracy error by optically detecting the rotation of the slits 130 in the rotating disc 120 using the single encoder detection unit 140, an increase in the size of the apparatus and a cost increase do not occur, and therefore the size of the apparatus can be reduced. Moreover, since the encoder apparatus 100 detects the rotation angle θ not including the absolute value accuracy error by optically detecting the rotation of the slits 130 in the rotating disc 120 using the single encoder detection unit 140, the apparatus can be installed easily without the need for troublesome adjustments such as those required conventionally, when two encoder detection units are used.

In the encoder apparatus 100 according to the first embodiment, the encoder processing unit 150 includes the angle data conversion unit 151A for calculating the first angle data P1 from the detection result of the first light reception unit 142A, the angle data conversion unit 151B for calculating the second angle data P2 from the detection result of the second light reception unit 142B, the error calculation unit 152 for calculating the absolute value accuracy error $\Delta1$, and the correction unit 153 for calculating the rotation angle θ by subtracting the absolute value accuracy error $\Delta1$ from the first angle data P1, the error calculation unit 152 calculates the absolute value accuracy error $\Delta1$ as $\Delta1 = (r2/(r2 - r1)) \times (P1 - P2)$ using the absolute value accuracy error $\Delta1$, the absolute value accuracy error $\Delta2$, the optical radius r1, and the optical radius r2, and the correction unit 153 calculates the rotation angle θ as $\theta = P1 - \Delta1$. Here, the error calculation unit 152 can calculate the absolute value accuracy error $\Delta1$ at high speed from the difference between the first angle data P1 and the second angle data P2 and the constant $(r2/(r2 - r1))$. The correction unit 153 then simply subtracts the absolute value accuracy error $\Delta1$ calculated by the error calculation unit 152 from the first angle data P1, and as a result, the rotation angle θ can be calculated at high speed and with high accuracy.

[Other embodiments]

A specific example in which the first light reception unit 142A and the second light reception unit 142B of the encoder detection unit 140 are arranged in different positions in the radial direction of the rotating disc 120 was described above, but the arrangement is not limited thereto, and various arrangement changes may be made. When the arrangement of the first light reception unit 142A and the second light reception unit 142B is changed, the absolute value accuracy error $\Delta1$ can be calculated by performing calculations corresponding to the arrangement, and in so doing, the rotation angle θ can be calculated with high accuracy.

A specific example in which the data are output from the output unit 154 of the encoder processing unit 150 was described above, but instead, a communication unit that communicates with the external device may be used.

In the configuration of the encoder apparatus 100 shown in Fig. 1, the error calculation unit 152 of the encoder processing unit 150 may be divided into a subtraction unit for calculating (P1 - P2) and a multiplication unit for calculating $(r2/(r2 - r1)) \times (P1 - P2)$.

Furthermore, in the configuration of the encoder apparatus 100 shown in Fig. 1, the error calculation unit 152 and the correction unit 153 of the encoder processing unit 150 may be integrated so that $\theta = P1 - (r2/(r2 - r1)) \times (P1 - P2)$ is calculated with respect to the rotation angle θ in a single operation by an integrated arithmetic processing unit.

Reference Signs List

| | |
|---|---|
| 1 | Rotating body |
| 100 | Encoder apparatus |
| 110 | Rotating shaft |
| 120 | Rotating disc |
| 130 | Slits |
| 140, 140A, 140B | Encoder detection unit |
| 141 | Light emission unit |
| 142 | Light reception unit |
| 142A | First light reception unit (light reception element set) |
| 142B | Second light reception unit (light reception element set) |
| 150 | Encoder processing unit |
| 151A | Angle data conversion unit |
| 151B | Angle data conversion unit |
| 152 | Error calculation unit |
| 153 | Correction unit |
| 154 | Output unit |
| C1 | Rotary center |
| C2 | Pattern center |
| r1 | Optical radius of first light reception unit |
| r2 | Optical radius of second light reception unit |
| $\delta$ | Distance (deviation) between rotary center and pattern center |
| $\theta$ | Rotation angle |

**Claims**

1. An encoder apparatus that detects rotation of a rotating disc (120) provided with slits (130) using an encoder detection unit (140), and calculates a rotation angle of the rotating disc (120) using an encoder processing unit (150), wherein in the encoder detection unit (140), a plurality of sets of light reception elements required to generate angle data are provided in a single light reception unit (142) in a predetermined arrangement, and

the encoder processing unit (150) converts light reception signals acquired by the plurality of sets of light reception elements into angle data of one rotation, calculates an absolute value accuracy error in the angle data of one rotation from the angle data and arrangement information relating to the arrangement, calculates the rotation angle by correcting an absolute accuracy of the angle data of one rotation using the absolute value accuracy error, and outputs the calculated rotation angle to the outside.

# FIG. 1

100

# FIG. 2

# FIG. 3

140

141

142

142A

142B

Encoder Detection Unit

# FIG. 4

142

142A — First Light Reception Unit

142B — Second Light Reception Unit

r1

r2

δ

C1    C2

# FIG. 5

## INTERNATIONAL SEARCH REPORT

International application No.

PCT/JP2020/042028

### A. CLASSIFICATION OF SUBJECT MATTER
Int. Cl. G01D5/347(2006.01)i
FI: G01D5/347 110S, G01D5/347 110M

According to International Patent Classification (IPC) or to both national classification and IPC

### B. FIELDS SEARCHED

Minimum documentation searched (classification system followed by classification symbols)
Int. Cl. G01D5/12-5/40, G01B11/00-11/30

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2015-215241 A (CANON INC.) 03 December 2015 (2015-12-03), paragraphs [0001]-[0006], [0012]-[0018], [0021], [0102]-[0143], fig. 2, 12, 13 | @@@] |
| Y | JP 2010-210316 A (YASKAWA ELECTRIC CORP.) 24 September 2010 (2010-09-24), paragraphs [0026], [0027], fig. 1, 2 | @@@] |
| A | JP 2012-068124 A (CANON INC.) 05 April 2012 (2012-04-05), entire text, all drawings | 1 |
| A | JP 2001-330478 A (FUJI ELECTRIC CO., LTD.) 30 November 2001 (2001-11-30), entire text, all drawings | @@@] |

☒ Further documents are listed in the continuation of Box C.        ☐ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03.12.2020 | 15.12.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2020/042028 |

C (Continuation).   DOCUMENTS CONSIDERED TO BE RELEVANT

| Category* | Citation of document, with indication, where appropriate, of the relevant passages | Relevant to claim No. |
|---|---|---|
| A | US 2015/0171999 A1 (SNU R&DB FOUNDATION) 18 June 2015 (2015-06-18), entire text, all drawings | 1 |

Form PCT/ISA/210 (continuation of second sheet) (January 2015)

## INTERNATIONAL SEARCH REPORT
Information on patent family members

| International application No. |
|---|
| PCT/JP2020/042028 |

| Patent Documents referred to in the Report | Publication Date | Patent Family | Publication Date |
|---|---|---|---|
| JP 2015-215241 A | 03.12.2015 | US 2015/0323352 A1 paragraphs [0001]-[0006], [0026]-[0032], [0035], [0094]-[0122], fig. 2, 12, 13 | |
| JP 2010-210316 A | 24.09.2010 | US 2010/0224768 A1 paragraphs [0055]-[0059], fig. 1, 2 CN 101832790 A KR 10-2010-0101532 A | |
| JP 2012-068124 A | 05.04.2012 | US 2012/0075622 A1 entire text, all drawings EP 2434261 A2 | |
| JP 2001-330478 A | 30.11.2001 | (Family: none) | |
| US 2015/0171999 A1 | 18.06.2015 | WO 2013/172564 A1 entire text, all drawings KR 10-2013-0129079 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S60146113 A